# EUROPEAN PATENT APPLICATION

(11) **EP 4 629 148 A1**
(43) Date of publication of application: **08.10.2025**
(21) Application number: 24168512.2
(22) Date of filing: 04.04.2024
(51) Int. Cl.: G06Q 10/0635

(54) **METHOD AND SYSTEM FOR AUTOMATED CRITICAL PATH IDENTIFICATION FOR SUPPLY CHAIN MANAGEMENT**

(71) Applicant: Siemens Aktiengesellschaft, 80333 München (DE)
(72) Inventor: Ding, Zifeng, 81549 München (DE); Han, Yaomengxi, 80797 München (DE); Liu, Yushan, 81737 München (DE)
(74) Representative: Siemens Patent Attorneys

(57) **Abstract**

A graph database stores a knowledge graph (KG), wherein nodes and edges of the knowledge graph (KG) store knowledge about a supply chain, wherein the nodes represent entities in the supply chain and the edges represent relationships among the entities, and wherein the entities are in particular suppliers, branches, industries, countries, products and/or materials. A graph-to-text encoder (ENC) encodes the knowledge graph (KG) into a knowledge graph description (KGD). A network interface prompts a large language model (CA) with the knowledge graph description (KGD) and receives at least one prediction (P) from the large language model (CA), wherein each prediction (P) contains a critical path in the supply chain and in particular a corresponding explanatory statement. A user interface outputs at least one of the predictions (P). The approach differs from traditional critical path identification methods in knowledge graphs by integrating global graph structures and utilizing pre-trained LLMs, which makes the reasoning faster, more stable, and explainable. LLMs can not only analyze the topological knowledge graph information but also leverage their world knowledge for better path identification. The described framework is easy to deploy and compatible with multiple platforms. It can be combined with a user-friendly interface to illustrate the reasoning results.

## Description

### Technical Field

The invention relates to a computer implemented method and system for automated critical path identification for supply chain management.

### Background Art

Shortage of material in a production plant for manufacturing products, e.g., a shortage of material required to manufacture a product or a shortage of spare parts for production machines, may lead to delay or even downtime of the production line. In addition, global crises (e.g., pandemics, natural disasters) and political and regulatory developments (e.g., diversification, trade wars) lead to increasing transparency requirements of the supply chains and need for faster reactions and risk mitigation strategies, to prevent delay or downtime of the production line. Transparency of tier-1 suppliers is usually existent in supply chain management (SCM) tools. However, only limited knowledge of tier-n (n>1) suppliers and corresponding supply chains is available.

SCM is monitoring supply chains to ensure their operability. Nevertheless, significant blind spots in deeper levels of the supply chains remain, which are of high relevance since many of the most pressing supply shortages (e.g., in the semiconductor industry), happen in these deeper supply chain tiers.

Thus, there is a need to identify whether and where there is a "critical path" in supply chains, i.e., constellations in the supply chains that lack the resistance to withstand interruptive events and that could lead to a material shortage resulting in a delay or downtime of the production line.

For example, a path could be critical if many suppliers are located in the same country or region, multiple tier-1 suppliers are customers of the same sub-supplier, all suppliers have high risk scores, etc. Based on the identified critical paths, strategic decisions and mitigation measures can be derived to prevent any shortage of material and subsequent delay or downtime of the production line.

As the number of suppliers and sub-suppliers is high and dependencies between the different suppliers, their location and the supplied materials is quite complex, it is not possible to consider it mentally or without technical support. Currently experts decide based on their experience and manual review of the supplier data whether there are risks in the supply chain - or are informed by a tier-1 supplier that there are problems in their supply chain consisting of supplier of tier-2 and higher.

Critical path identification (CPI) in supply networks thus aims to find the significant supply chain paths related to a certain user-interested company. Each supply chain of length n - 1 follows the format of (Company, supplies_to ... supplies_to Companyₙ), where Companyₙ is the company of interest.

Data-driven machine learning models play an increasingly important role in the modern world. More and more often, data-driven assistance systems are integrated into various engineering tools with the goal of assisting supply chain managers in performing various actions, providing insights, and mitigating supply chain risks.

Thus, there is a need to identify, based on existing data, whether and where there is a "critical path" in supply chains, i.e., constellations in the supply chains that lack the resistance to withstand interruptive events, and which could lead to a material shortage resulting in a delay or downtime of the production line.

### Summary of Invention

It is an object of the present invention to identify a problem in the prior art and to find a technical solution for this.

The objectives of the invention are solved by the independent claims. Further advantageous arrangements and embodiments of the invention are set forth in the respective dependent claims.

According to the method for automated critical path identification for supply chain management, the following operations are performed by components, wherein the components are hardware components and/or software components executed by one or more processors:
- storing, by a graph database, a knowledge graph, wherein nodes and edges of the knowledge graph store knowledge about a supply chain, wherein the nodes represent entities in the supply chain and the edges represent relationships among the entities, and wherein the entities are in particular suppliers, branches, industries, countries, products and/or materials,
- encoding, by a graph-to-text encoder, the knowledge graph into a knowledge graph description,
- prompting a large language model, wherein at least one prompt includes the knowledge graph description, and receiving at least one prediction from the large language model, wherein each prediction contains a critical path in the supply chain and in particular a corresponding explanatory statement, and
- outputting, by a user interface, at least one of the predictions.

The system for automated critical path identification for supply chain management comprises the following components, wherein the components are hardware components and/or software components executed by one or more processors:
- a graph database, configured for storing a knowledge graph, wherein nodes and edges of the knowledge graph store knowledge about a supply chain, wherein the nodes represent entities in the supply chain and the edges represent relationships among the entities, and wherein the entities are in particular suppliers, branches, industries, countries, products and/or materials,
- a graph-to-text encoder, configured for encoding the knowledge graph into a knowledge graph description,
- a network interface, configured for prompting a large language model, wherein at least one prompt includes the knowledge graph description, and for receiving at least one prediction from the large language model, wherein each prediction contains a critical path in the supply chain and in particular a corresponding explanatory statement, and
- a user interface, configured for outputting at least one of the predictions.

The following advantages and explanations are not necessarily the result of the object of the independent claims. Rather, they may be advantages and explanations that only apply to certain embodiments or variants.

Regarding the system for automated critical path identification for supply chain management, since LLMs are usually cloud-based services, the system only needs a network interface capable of communicating with the large language model CA. That network interface is configured for transmitting, as part of a prompting operation, the knowledge graph description KGD to the large language model CA as input, and for receiving at least one prediction P from the large language model CA, wherein each prediction P contains a critical path in the supply chain and in particular a corresponding explanatory statement. The network interface can achieve this kind of response by sending suitable prompts to the large language model CA, as will be described in more detail below. The network interface can communicate with the large language model CA via an intranet and/or internet, for example.

In other words, although the large language model CA is prompted by the system and replies to the system, it does not need to be part of the system itself. Also, any off-the-shelf pre-trained large language model can be accessed by the network interface. Furthermore, such an off-the-shelf pre-trained large language model does not need to be modified in any way for this to work, it can be accessed by the network interface as is.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, or any other communication devices that can process data with computer support, for example processors or other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk, a solid state drive or a Disk.

The method and system, or at least some of their embodiments, differ from traditional critical path identification methods in knowledge graphs, by integrating global graph structures and utilizing pre-trained LLMs, which makes the reasoning faster, more stable, and explainable. The method and system, or at least some of their embodiments, do not assume homogeneity across all entities and relationships, thus improving applicability in scenarios where diverse or heterogeneous structures need to be considered.

The method and system, or at least some of their embodiments, are the first to use an LLM to perform critical paths identification in large supply networks. LLMs can not only analyze the topological knowledge graph information but also leverage their world knowledge for better path identification. Given their robust emergent capabilities in diverse down-stream tasks without the need for fine-tuning, LLMs serve as a promising tool for this task.

The method and system, or at least some of their embodiments, can identify the critical paths given a supply chain knowledge graph and any target company.

The method and system, or at least some of their embodiments, are easy to deploy and compatible with multiple platforms.

The method and system, or at least some of their embodiments, can combined with a user-friendly interface to illustrate the reasoning results.

### Description of Embodiments

An embodiment of the method comprises the additional operation of filtering, by a comparator, the predictions by
- comparing the critical path contained in each prediction with a set of ground truths, and removing predictions if their critical path does not match the set of ground truths, and/or
- calculating an accuracy metric and/or a rank-biased overlap metric for the critical path contained in each prediction, and removing predictions for which the calculated metrics are below a given threshold, and
wherein the outputting operation outputs the filtered predictions only.

For example, this embodiment can remove hallucinations from the predictions.

In another embodiment of the method and system,
- a ranked list of predictions is received from the large language model, and
- the outputting operation outputs at least the top-ranked prediction.

In another embodiment of the method and system, the user interface outputs an interactive visualization for at least one of the predictions, depicting the respective critical path within the supply chain, as well as the corresponding explanatory statement.

In another embodiment of the method and system,
- the graph-to-text encoder maps the name of each entity represented in the knowledge graph to a distinct identifier in the knowledge graph description, and
- the knowledge graph description contains a list of adjacent links for each relationship type represented in the knowledge graph.

In another embodiment of the method and system, the knowledge graph description contains natural language sentences describing the supply chain.

Natural language encoding serves as a better encoding strategy since it leverages background knowledge of companies stored in LLMs, making the explanations more reasonable.

In another embodiment of the method and system, the at least one prompt is a single automatically generated prompt consisting of a prefix, the knowledge graph description, and a suffix. The prompt asks the large language model to identify, and in particular to rank, the most critical paths in the supply chain, and in particular to generate a corresponding explanatory statement for each identified critical path.

In another embodiment of the method and system, the at least one prompt is a series of automatically generated prompts consisting of at least one initial prompt and a final prompt, wherein
- at least one of the initial prompts includes the knowledge graph description,
- at least one of the initial prompts asks a question about centrality of nodes, and
- the final prompt asks the large language model to identify, and in particular to rank, the most critical paths in the supply chain, and in particular to generate a corresponding explanatory statement for each identified critical path.

Decomposing the task of the large language model with the series of prompts helps the large language model to return more accurate critical paths with reasonable explanations since it forces the large language model to pay attention to the critical suppliers that are more likely to exist in critical paths.

In another embodiment of the method and system,
- a first automated prompt of the initial prompts asks for the top significant tier-1 suppliers of a target company, and
- a second automated prompt of the initial prompts asks for the top significant tier-2 suppliers, which are direct suppliers from the previously identified tier-1 suppliers.

The computer program product comprises instructions which, when the program is executed by a computer, cause the computer to carry out the method.

The provisioning device stores and/or provides the computer program product.

### Brief Description of the Drawing

The foregoing and other aspects of the present invention are best understood from the following detailed description when read in connection with the accompanying drawings. For the purpose of illustrating the invention, the drawings show embodiments that are presently preferred. However, the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:
- Fig. 1: shows a first embodiment,
- Fig. 2: shows another embodiment,
- Fig. 3: shows an overall architecture of an embodiment,
- Fig. 4: shows a sample encoding result from a small-sized knowledge graph with two types of nodes and two types of relationships,
- Fig. 5: shows a flowchart of a possible exemplary embodiment.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

### Description of Examples

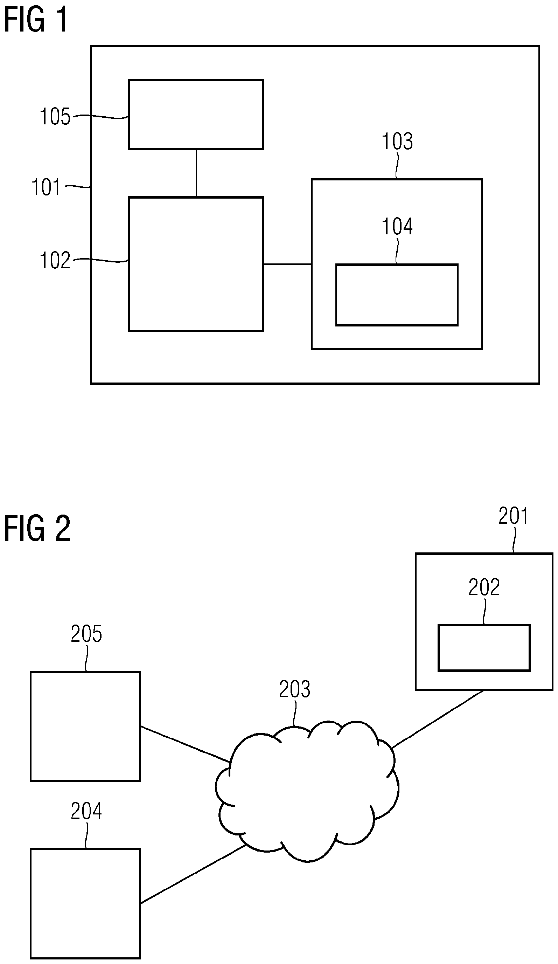

Fig. 1 shows one sample structure for computer-implementation of the invention which comprises:

| | |
|---|---|
| (101) | computer system |
| (102) | processor |
| (103) | memory |
| (104) | computer program (product) |
| (105) | user interface |

In this embodiment of the invention the computer program 104 comprises program instructions for carrying out the invention. The computer program 104 is stored in the memory 103 which renders, among others, the memory 103 and/or its related computer system 101 a provisioning device for the computer program 104. The computer system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:

| | |
|---|---|
| (201) | provisioning device |
| (202) | computer program (product) |
| (203) | computer network/Internet |
| (204) | computer system |
| (205) | mobile device/smartphone |

In this embodiment the provisioning device 201 stores a computer program 202 which comprises program instructions for carrying out the invention. The provisioning device 201 provides the computer program 202 via a computer network/Internet 203. By way of example, a computer system 204 or a mobile device/smartphone 205 may load the computer program 202 and carry out the invention by executing the program instructions of the computer program 202.

In a variation of this embodiment, the provisioning device 201 is a computer-readable storage medium, for example a SD card, that stores the computer program 202 and is connected directly to the computer system 204 or the mobile device/smartphone 205 in order for it to load the computer program 202 and carry out the invention by executing the program instructions of the computer program 202.

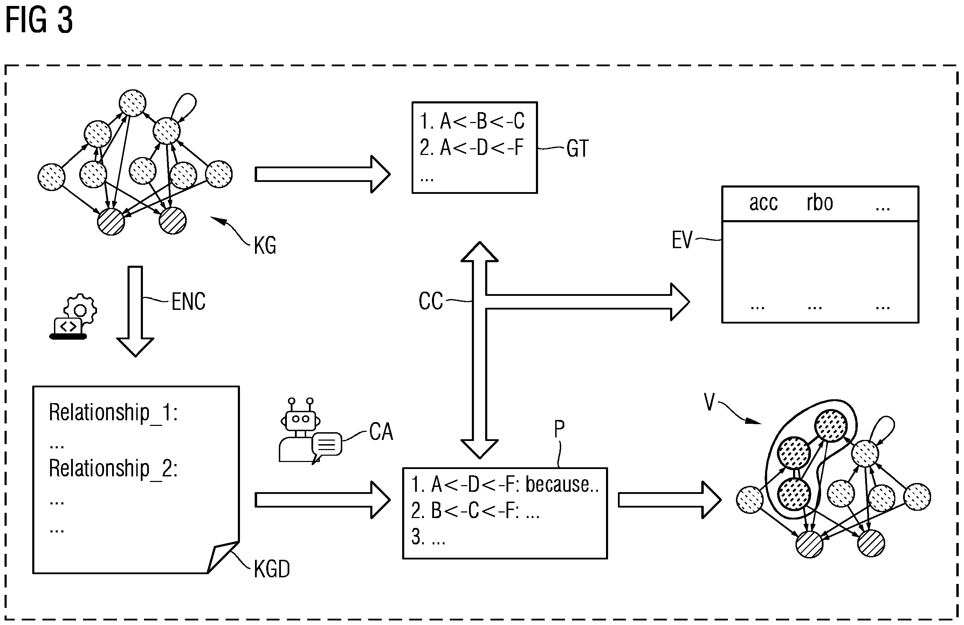

Preferably, the embodiments shown in Figs. 3 to 5 can be implemented with a structure as shown in Fig. 1 or Fig. 2.

Recently, large language models (LLMs) have shown emergent capabilities and generalizability over a wide range of tasks for a variety of domains. Their reasoning skills and understanding of natural language make them suitable for many industrial applications.

Some previous works adopt various approaches to encode knowledge graphs into natural language descriptions, which LLMs can then reason over. They provide valuable insights into how well pre-trained LLMs can answer questions about graph structures and calculate relatively harder questions like maximum flow without training. One example of these previous works will be described in the following.

Bahare Fatemi, Jonathan Halcrow, Bryan Perozzi: Talk like a Graph: Encoding Graphs for Large Language Models, 2023, arXiv:2310.04560v1 [cs.LG], available on the internet at https://doi.org/10.48550/arXiv.2310.04560 on 26.03.2024, disclose how various factors, including the encoding method, the graph structure, and the type of the task, impact the performance of LLM's reasoning over a graph. Different encoding methods, among all these factors, play a major role in changing an LLMs' performance in graph reasoning. The entire contents of that document are incorporated herein by reference.

Fig. 3 shows an overall architecture of an embodiment capable of automated critical path identification.

The embodiment shown in Fig. 3 employs a framework based on the usage of LLMs for the identification of critical suppliers and paths in a supply network. The technical solution is based on a sophisticated form of automated prompt engineering. As part of the prompt engineering, one of the embodiments employs a sophisticated form of chain-of-thought (CoT) prompting.

A knowledge graph KG stores information on supply chains along with relevant context information. For example, nodes of the knowledge graph KG represent suppliers, locations, products, etc., and edges of the knowledge graph KG represent dependencies between these nodes. As a result, the knowledge graph KG describes an entire supplier network.

If the knowledge graph KG contains information for more than one company at the end of the supply chain, then the knowledge graph KG can be reduced to a subgraph by picking all the facts containing a selected target company and all its tier-1 to tier-3 suppliers, for example.

A graph-to-text encoder ENC compresses relevant information from the knowledge graph KG to a knowledge graph description KGD in natural language. The graph-to-text encoder ENC is capable of compressing knowledge graphs of any scale to a concise natural language description without loss of information.

A large language model CA, which is performing as a conversation agent for critical path identification, is prompted with at least one prompt including the knowledge graph description KGD. At least one prediction P is received from the large language model CA, wherein each prediction P contains a critical path in the supply chain and in particular a corresponding explanatory statement.

A comparator CC automatically compares the critical path contained in each prediction P with a set of ground truths GT. This could mean, for example, that the comparator CC checks if the critical path contained in each prediction P exists at all in the knowledge graph KG (and thus has not been hallucinated). The set of ground truths GT can be extracted automatically from the knowledge graph KG and can be based on centralities in the knowledge graph KG. The comparator CC then filters the predictions P by removing predictions P that are implausible and/or hallucinated. In other words, predictions P returned by the large language model CA can be discarded if the respective paths do not exist in the knowledge graph KG, while the rest of the predictions P received from the large language model CA can be taken as the identified critical paths.

In a specific embodiment, another comparison performed by the comparator CC yields the metrics accuracy acc and rank-biased overlap rbo for reference, as shown in a corresponding evaluation table EV in Fig. 3. The computation of those metrics is disclosed in William Webber, Alistair Moffat, Justin Zobel: A similarity measure for indefinite rankings. ACM Trans. Inf. Syst. 28(4): 20:1-20:38 (2010). The entire contents of that document are incorporated herein by reference. The comparator CC then filters the predictions P by removing predictions P for which the calculated metrics are below a given threshold.

A user interface outputs the predictions P to a user. For example, the user interface creates an interactive visualization V for the predictions P which allows the user to explore the results, and to understand the criticality of each identified path.

The embodiment shown in Fig. 3 can be deployed for any supply chain system/database to detect the most critical paths within.

### Knowledge graph KG

In the current embodiment, the knowledge graph *KG* takes the form of a directed multigraph, where the nodes represent entities in a supply chain and the edges represent relationships among them. That means, *KG* ⊂ E × *R* × E, where E denotes the entity (or vertex) set and R the set of edge types (or relations). Among others, the vertices correspond to suppliers, branches, industries, countries, and the edge types specify how a pair of entities is connected to each other. For example, a triple (*SiemensAG, LocatedIn, Germany*) ∈ *KG* contains the information that the company Siemens AG has production sites in Germany. In addition to the topological information given by the entirety of edges, there may also exist a contextual annotation of both the nodes and edges. A suitable implementation of the knowledge graph KG is described in Yushan Liu, Bailan He, Marcel Hildebrandt, Maximilian Buchner, Daniela Inzko, Roger Wernert, Emanuel Weigel, Dagmar Beyer, Martin Berbalk, and Volker Tresp: A knowledge graph perspective on supply chain resilience, in: D2R2, CEUR Workshop Proceedings, vol. 3401, CEUR-WS.org (2023). The entire contents of that document are incorporated herein by reference.

### Graph-to-text encoder ENC

The document "Talk like a Graph: Encoding Graphs for Large Language Models", which has been cited above and is incorporated herein by reference, describes encoding a simple directed graph in the form of tuples (*A, B*)*.* Drawing from this approach, the graph-to-text encoder ENC provides output that can be decomposed into two parts:
1. Node attributes: In the current embodiment, all nodes in the knowledge graph KG are classified by their type. In order to pack as much information as possible within the limited number of tokens, the encoding scheme leaves out the name of each node and represents them in the form of a distinct node ID. All explicit properties can be included in the encoded knowledge graph description KGD, while implicit properties such as in- and out-degrees will not be encoded since the large language model CA has the ability to reason over these features based on the structure.
2. Edge attributes: In the current embodiment, all edges in the knowledge graph KG are classified by their relationship type. Edges of each relationship type are encoded in the knowledge graph description KGD in the form of adjacent links considering the information density. The properties of these edges, if they exist, will also be encoded alongside these links.

In other words, this form of adjacent link encoding maps the names of all entities to distinct IDs, groups the relationships by their types, and translates the relationships into lists of adjacent links. For example, a link b01 ← b03, b05, b11 under the group supplies_to indicates that b03, b05, and b11 all supply to b01.

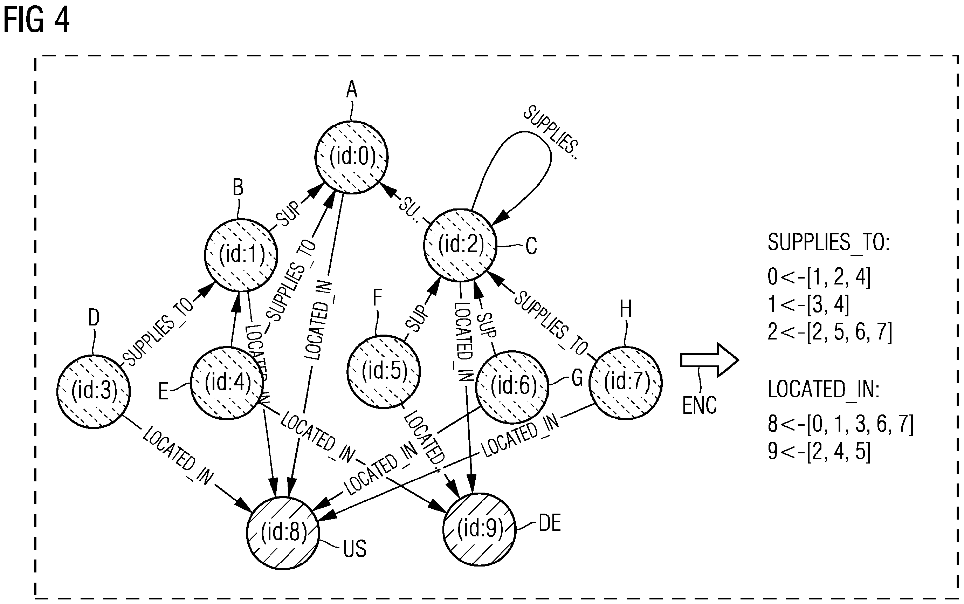

Fig. 4 shows a sample encoding result of the above-described graph-to-text encoder ENC encoding a small-sized knowledge graph with two types of nodes and two types of relationships.

Nodes A, B, C, D, E, F, G, H represent different companies acting as suppliers and/or customers, whereas node US represents the United States and node DE represents Germany. The text on the right forms the knowledge graph description KGD (as depicted in Fig. 3) that is meant to conserve the information in the knowledge graph with a minimum number of tokens. For example, the text contains the information that the nodes with id 1, 2, 4 supply to the node with id 0. In other words, the companies represented by nodes B, C, E supply to the company represented by node A.

The above-described implementation of the graph-to-text encoder ENC is intended to minimize the number of tokens in the knowledge graph description KGD to facilitate processing by the large language model CA. If minimizing the number of tokens is not as critical in a given use case, for example due to sufficient capacity on the side of the language model, then natural language can replace the adjacent links shown in Fig. 4, resulting in a knowledge graph description KGD that contains complete natural language sentences, for example "BASF, Nvidia supply to VW. Nvidia is in the US. BASF is related to chemistry. Nvidia produces circuits.", depending on the information stored in the knowledge graph KG. In other words, this form of natural language encoding does not anonymize the elements in the supply network but directly outputs a natural language description of it. While this natural language encoding is more interpretable by both humans and LLMs, it requires more tokens to convey the same information compared with adjacent link encoding.

As large language model CA, the current embodiment prompts for example a pre-trained GPT model, such as GPT-3.5 or GPT-4. When prompted properly with the knowledge graph description KGD and a carefully crafted prefix and suffix, the large language model CA will reason about the knowledge graph KG as indicated by the prompt.

Various embodiments use one or both of the following variants for prompting the large language model CA: first, a direct mode, where the large language model CA is directly asked to rank the most critical paths in the supply chain after fed the knowledge graph description KGD, and second, a step-by-step mode, where a multi-turn interaction with the large language model CA is employed, prompting it with questions about centrality of nodes first before asking the final question about the most critical paths in the supply chain.

The step-by-step mode initiates a fully automated multi-turn question answering (QA) process with the large language model CA, in order to step-by-step guide the large language model CA to provide critical supply chain paths along with corresponding explanations. Depending on the use case, it may suffice to pay attention to paths of length 2, among 3 entities.

Critical path identification on a large knowledge graph is a non-trivial task, hence the step-by-step mode decomposes the complicated task into several sub-tasks. A supply chain path of length 3 consists of the target company, one tier-1 supplier, and one tier-2 supplier. Hence, the fully automated multi-turn question answering process starts by asking the large language model CA to give the top 20 significant tier-1 suppliers of the target company, then proceeds to ask about the top 20 significant tier-2 suppliers, which are direct suppliers from the previously output tier-1 suppliers. Finally, the fully automated multi-turn question answering process asks the large language model CA to find the 20 most critical paths.

The first prompt of the fully automated multi-turn question answering process could look like this:
*Given this knowledge graph:*
*[pasted knowledge graph description KGD],*
*What are the top tier-1 suppliers of Siemens?*
*Start your answer with: 1. xx: because* ...

The second prompt of the fully automated multi-turn question answering process could look like this:
*Rank the top 20 tier-2 suppliers.*
*Start your answer with: 1. xx because* ...

The third prompt of the fully automated multi-turn question answering process could look like this:
*Please identify the 20 most critical paths ending with Siemens.*
*Start your answer with: 1. Siemens <- x <- y: because* ...

A typical answer provided by the LLM to the third prompt would be:
*1. Siemens <- BASF <- X Lab: because X Lab supplies BASF with various chemicals, which then help the manufacturing of Siemens.*

The prompts are not entered manually by a user but created automatically using fixed templates that have been prepared in advance.

Prompting the large language model CA with questions about centrality of nodes, such as the questions regarding the top tier-1 and tier-2 suppliers, emphasizes and integrates knowledge about a global structure of the knowledge graph KG. This is because nodes with a central position in the supplier network may constitute a bottleneck in the supply chain and therefore be part of a critical path. For example, if multiple tier-1 suppliers are all connected via a "supplies_to"-relation to a particular tier-2 supplier, then this is likely to constitute a critical path because the failure of the tier-2 supplier may have a high impact on the supply chain.

Similarly, if a multitude of the suppliers produce in the same country, there might be an increased supply chain risk due to the exposure to a common confounder, i.e., an attribute that many nodes have in common, such as natural disasters, political events, or disturbances in the transportation system. These topological bottlenecks in the supplier network may be detected via high centrality scores, and when placed in context with the topology and other node attributes, is an important feature when it comes to detecting supply chain risks.

The step-by-step mode is expected to work better than the direct mode since the large language model CA is encouraged to reason more about the centrality before making relevant conclusions about criticality.

### Interactive Visualization V

The user interface outputs an interactive visualization V for at least one, several or all of the predictions P, depicting the respective critical paths within the supply chain, as well as the corresponding explanatory statements. Thus, the user interface shows users how each critical path looks like in the overall supply chain. A user can use the interactive visualization V along with the agent's explanation to see where the criticality of each path comes from and can further interact with the interactive visualization V by hovering over the nodes and edges she is interested in to see more details or connected components left out of the concern for the simplicity of the interactive visualization V.

### Workflow Deployment

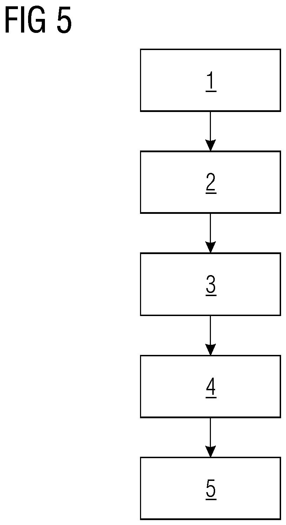

Fig. 5 shows a flowchart of a possible exemplary embodiment, describing a workflow during deployment of the framework shown in Fig. 3.

In a first operation 1, a graph database stores a knowledge graph, wherein nodes and edges of the knowledge graph store knowledge about a supply chain, wherein the nodes represent entities in the supply chain and the edges represent relationships among the entities, and wherein the entities are in particular suppliers, branches, industries, countries, products and/or materials.

In a second operation 2, the graph-to-text encoder ENC encodes the knowledge graph KG into a knowledge graph description KGD.

In a third operation 3, a large language model CA is prompted with at least one prompt including the knowledge graph description KGD. At least one prediction P is received from the large language model CA, wherein each prediction P contains a critical path in the supply chain and in particular a corresponding explanatory statement. To this end, two alternative prompting modes can be employed as described in the previous section.

In an optional fourth operation 4, the comparator CC automatically compares the critical path contained in each prediction P with the set of ground truths GT. The comparator CC then filters the predictions P by removing predictions P that do not match the set of ground truths GT. In a specific embodiment, the comparator CC calculates an accuracy metric and/or a rank-biased overlap metric for the critical path contained in each prediction P. The comparator CC then filters the predictions P by removing predictions P for which the calculated metrics are below a given threshold.

In a fifth operation 5, a user interface outputs at least one of the predictions P. This can be done in the form of an interactive visualization V, showing the user the identified most critical paths in the supply chain and revealing more details when hovered over.

Regarding the system for automated critical path identification for supply chain management, since LLMs are usually cloud-based services, the system only needs a network interface capable of communicating with the large language model CA. That network interface is configured for transmitting the knowledge graph description KGD to the large language model CA as part of a prompting operation, and for receiving from the large language model CA at least one prediction P, wherein each prediction P contains a critical path in the supply chain and in particular a corresponding explanatory statement. The network interface can achieve this kind of response by sending the above-described prompts to the large language model CA. The network interface can communicate with the large language model CA via an intranet and/or internet, for example.

In other words, although the large language model CA is prompted by the system and replies to the system, it does not need to be part of the system itself. Also, any off-the-shelf pre-trained large language model can be accessed by the network interface. Furthermore, such an off-the-shelf pre-trained large language model does not need to be modified in any way for this to work, it can be accessed by the network interface as is.

In a specific variant, however, it is possible that the large language model CA itself is also part of the system.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform acts corresponding with the operations of the method described above.

The instructions for implementing processes or methods described herein may be provided on computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the spirit and scope of the invention covered by the claims. The phrase "A, B and/or C" as an alternative expression may provide that one or more of A, B and C may be used.

Independent of the grammatical term usage, individuals with male, female, or other gender identities are included within the term.

## Claims

1. A computer implemented method for automated critical path identification for supply chain management, wherein the following operations are performed by components, and wherein the components are hardware components and/or software components executed by one or more processors:
- storing (1), by a graph database, a knowledge graph (KG), wherein nodes and edges of the knowledge graph (KG) store knowledge about a supply chain, wherein the nodes represent entities in the supply chain and the edges represent relationships among the entities, and wherein the entities are in particular suppliers, branches, industries, countries, products and/or materials,
- encoding (2), by a graph-to-text encoder (ENC), the knowledge graph (KG) into a knowledge graph description (KGD),
- prompting (3) a large language model (CA), wherein at least one prompt includes the knowledge graph description (KGD), and receiving at least one prediction (P) from the large language model (CA), wherein each prediction (P) contains a critical path in the supply chain and in particular a corresponding explanatory statement, and
- outputting (5), by a user interface, at least one of the predictions (P).

2. The method of claim 1,
- with the additional operation of filtering (4), by a comparator (CC), the predictions (P) by
- comparing the critical path contained in each prediction (P) with a set of ground truths (GT), and removing predictions (P) if their critical path does not match the set of ground truths (GT), and/or
- calculating an accuracy metric and/or a rank-biased overlap metric for the critical path contained in each prediction (P), and removing predictions (P) for which the calculated metrics are below a given threshold, and
- wherein the outputting operation (5) outputs the filtered predictions (P) only.

3. The method according to any of the preceding claims, wherein
- a ranked list of predictions (P) is received from the large language model (CA), and
- the outputting operation (5) outputs at least the top-ranked prediction (P).

4. The method according to any of the preceding claims,
- wherein the user interface outputs an interactive visualization (V) for at least one of the predictions (P), depicting the respective critical path within the supply chain, as well as the corresponding explanatory statement.

5. The method according to any of the preceding claims, wherein
- the graph-to-text encoder (ENC) maps the name of each entity represented in the knowledge graph (KG) to a distinct identifier in the knowledge graph description (KGD), and
- the knowledge graph description (KGD) contains a list of adjacent links for each relationship type represented in the knowledge graph (KG).

6. The method according to any of the preceding claims 1 to 4,
- wherein the knowledge graph description (KGD) contains natural language sentences describing the supply chain.

7. The method according to any of the preceding claims,
- wherein the at least one prompt is a single automatically generated prompt consisting of a prefix, the knowledge graph description (KGD), and a suffix, and wherein the prompt asks the large language model (CA) to identify, and in particular to rank, the most critical paths in the supply chain, and in particular to generate a corresponding explanatory statement for each identified critical path.

8. The method according to any of the preceding claims 1 to 6,
- wherein the at least one prompt is a series of automatically generated prompts consisting of at least one initial prompt and a final prompt, wherein
- at least one of the initial prompts includes the knowledge graph description (KGD),
- at least one of the initial prompts asks a question about centrality of nodes, and
- the final prompt asks the large language model (CA) to identify, and in particular to rank, the most critical paths in the supply chain, and in particular to generate a corresponding explanatory statement for each identified critical path.

9. The method according to claim 8, wherein
- a first automated prompt of the initial prompts asks for the top significant tier-1 suppliers of a target company, and
- a second automated prompt of the initial prompts asks for the top significant tier-2 suppliers, which are direct suppliers from the previously identified tier-1 suppliers.

10. A system for automated critical path identification for supply chain management, comprising:
- a graph database, configured for storing (1) a knowledge graph (KG), wherein nodes and edges of the knowledge graph (KG) store knowledge about a supply chain, wherein the nodes represent entities in the supply chain and the edges represent relationships among the entities, and wherein the entities are in particular suppliers, branches, industries, countries, products and/or materials,
- a graph-to-text encoder (ENC), configured for encoding (2) the knowledge graph (KG) into a knowledge graph description (KGD),
- a network interface, configured for prompting (3) a large language model (CA), wherein at least one prompt includes the knowledge graph description (KGD), and for receiving at least one prediction (P) from the large language model (CA), wherein each prediction (P) contains a critical path in the supply chain and in particular a corresponding explanatory statement, and
- a user interface, configured for outputting (5) at least one of the predictions (P).

11. A computer program product comprising instructions which, when the program is executed by a computer, cause the computer to carry out a method according to one of the method claims.

12. A provisioning device for the computer program product according to the preceding claim, wherein the provisioning device stores and/or provides the computer program product.
